# EUROPÄISCHE PATENTSCHRIFT

(11) **EP 0 970 904 B1**
(45) Veröffentlichungstag und Bekanntmachung des Hinweises auf die Patenterteilung: **15.12.2004**
(21) Anmeldenummer: 99111982.7
(22) Anmeldetag: 28.06.1999
(51) Int. Cl.: B65H 19/10

(54) **Klebeband und seine Verwendung**
Adhesive tape and it's use
Bande adhésive et son utilisation

(30) Priorität: 09.07.1998 DE 19830674
(43) Veröffentlichungstag der Anmeldung: 12.01.2000
(73) Patentinhaber: tesa AG, 20253 Hamburg (DE)
(72) Erfinder: Wienberg, Uwe, 25436 Uetersen (DE)

(56) Entgegenhaltungen:
- EP-A- 0 618 162
- WO-A-95/29115
- DE-A- 19 628 317
- DE-A- 19 632 689
- FR-A- 2 265 649

## Beschreibung

Die Erfindung betrifft ein Klebeband für den fliegenden Rollenwechsel (flying splice) in Papierveredelungsmaschinen, Rotationsdruckmaschinen und dergleichen, sowie seine entsprechende Verwendung.

Der fliegende Rollenwechsel ist in Papierfabriken oder dergleichen ein gängiges Ver fahren, um ohne die schnell laufenden Maschinen anhaften zu müssen eine alte, fast abgespulte Papierrolle durch eine neue zu ersetzen. Dabei werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören. Diese Fixe werden in kunstvoller Weise in Zackenform am Bahnanfang verklebt, eine Prozedur, die erfahrene Fachleute verlangt, wobei für den gesamten Arbeitsvorgang aufgrund der schnell laufenden Maschinen nur etwa 4 - 13 Minuten Zeit bleibt, je nach Arbeitsbreite und Splice-Form.

Obgleich diese Technologie bewährt und eingespielt ist, hat sie doch einige Nachteile. So ist Fachpersonal nötig, Hektik ist vorgegeben, und die Verklebungen sind auch relativ dick, da jeweils zwei Papierlagen und das dazwischen klebende Fix das Resultat sind: ein in der Papierindustrie unerwünschtes Resultat.

Für diese Spitzenverklebung" beim fliegenden Rollenwechsel gibt es diverse Produkte im Handel, sogenannte Fixe, die neben einem Papierträger eine wasserlösliche Selbstklebemasse beidseits beschichtet aufweisen. Solche Klebebänder sind u.a. unter der Bezeichnung tesafix (Beiersdorf) im Handel.

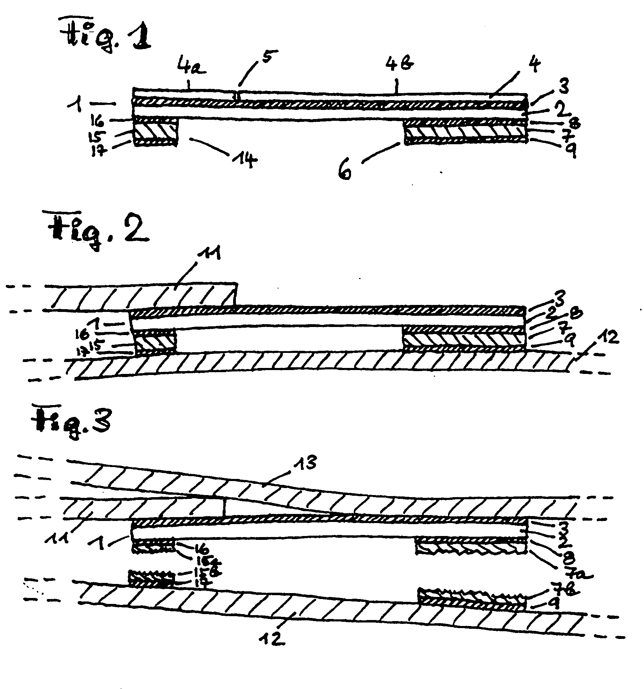

Bekannt ist ferner aus ***EP 418 527 A2*** ein Verfahren zum Vorbereiten einer Bedruckstoffbahnrolle in einem Rollenwechsler einer Rotationsdruckmaschine, bei dem Klebestreifen verwendet werden, die in drei Zonen unterteilt sind (Sp. 3, Z. 12 ff. und Fig. 1 und 2), wobei die mittlere Zone 6 perforiert ist. An dieser Perforierung findet dann das Aufreißen statt (Sp. 3, Z. 35).

Zudem ist aus ***DE 40 33 900 A1*** ein Klebeband bekannt, das für einen vorgenannten Splice geeignet ist und das stark unterschiedliche Klebkräfte auf den einander gegenüberliegenden Seiten aufweist, so daß es beim Abreißen eher am Tambour (vgl. Sp. 2, Z. 17 ff) haftet.

In der Praxis haben derartige Klebebänder jedoch gravierende Nachteile, insbesondere durch nach dem Splice vorliegende klebende Flächen.

Es ist aus ***DE 196 28 317 A1*** aber auch bereits ein Klebeband für derartige Anwendungen bekannt, bei dem nach erfolgten Splice keine klebenden Flächen mehr auftreten, indem dort ein spleißfreudiger Papierträger 7 zum Einsatz kommt, der beim Splice spaltet und nach erfolgtem Splice die Klebmassen 8 und 9 abdeckt, vgl. Fig. 3. Auch aus ***DE 196 32 689 A1*** ist ein ähnliches Klebeband für diese Anwendung bekannt, wobei hier jedoch ein spleißfreudiger Papierträger eingesetzt wird, der über die gesamte Breite des Klebebandes spaltet, vgl. insbes. Fig. 3.

Gleichwohl haben auch derartige Klebebänder ihre Nachteile. Bei Applizieren eines Klebebandes nach DE 196 28 317 erweist es sich als problematisch, daß das Ende einer Papierrolle (in Fig. 2 als 11 bezeichnet), Spielraum behält indem entweder das Klebeband mit seiner Selbstklebemasse 9 noch nicht auf der darunter befindlichen Papierbahn verklebt ist, oder bei zunächst auf die nächstuntere Bahn verklebtem Klebeband noch nicht mit der obersten Bahn verklebt ist, oder aber auch nach erfolgter vollständiger Verklebung sich leicht von der nächstunteren Bahn nach außen abheben kann und dabei ggf. den spleißfreudigen Papierträger 7 beschädigt, bevor der eigentliche Splice angesetzt wird. Bei einem Klebeband gem. DE 196 32 681 zeigt sich eine Schwachstelle insbesondere dort, wo nach erfolgtem Splice die alte und die neue Bahn verbunden sind (etwa im linken Drittel der Fig. 3), wo dann leicht ein Reißer auftritt und der Splice damit mißlungen ist

Die ***WO 95*****/*****29115*** offenbart ein Klebeband für den fliegenden Rollenwechsel, auf dessen Rückseite zwei Streifen einer trägerlosen Selbstklebemasse angebracht sind, welche mit einem Abdeckmaterial versehen sein können. Der Spleißvorgang läuft ab, indem die Klebeschicht von der darunter liegenden Bahn abgelöst wird. Die Qualität des derart funktionierenden Klebebandes liegt in den Klebkräften der entsprechenden Klebmassen. Nach dem erfolgten Rollenwechsel verbleiben die Klebeschichten klebend auf der Papierbahn und können im weiteren Verfahren stören.

Aufgabe der Erfindung war es, hier Abhilfe zu schaffen, insbesondere die Nachteile des Standes der Technik zu vermeiden oder zumindest in für die Praxis ausreichender Weise abzumildern.

Keine der vorstehend geschilderten Schriften vermag einen Hinweis zur Lösung der vorstehend beschriebenen Aufgabe zu geben, auch nicht in Kombination mit den weiteren Schriften gemäß des Standes der Technik.

Demgemäß betrifft die Erfindung ein Klebeband, wie dies näher in den Ansprüchen gekennzeichnet ist. Vorteilhafte Ausführungensformen sind in den Unteransprüchen angegeben.

Mit dem erfindungsgemäßen Klebeband werden hervorragende Ergebnisse beim Splice erzielt und insbesondere eine beträchtliche Verbesserung gegenüber einen Band gemäß DE 196 28 317 erreicht. Daß sowohl das Ausrüsten einer Papierrolle zum Splice als auch der Splice selbst durch eine Änderung des vorbekannten Klebebandes wesentlich erleichtert bzw. verbessert werden kann, indem man an beiden rückseitigen Randbereichen spleißfreudige Streifen eines Fixes hinterlegt, war aus dem Stand der Technik nicht herzuleiten.

Und auch ein Verfahren unter Verwendung derartiger Klebebänder ist Gegenstand der Erfindung, nämlich ein Verfahren eines fliegenden Rollenwechsels in einer Papierveredefungsmaschine oder dergleichen, wobei ein Klebeband mit einem Papierträger und einer wasserlöslichen Selbstklebemasse verwendet wird, dadurch gekennzeichnet, daß man ein Klebeband nach einem der Ansprüche einsetzt und der obersten Papierbahn einer neuen Papierrolle teilweise hinterklebt, während die auf der Rückseite des Klebebandes befindlichen doppelseitigen Klebebänder ihrerseits mit der darunter liegenden Papierbahn verkleben und damit die oberste Papierbahn sichern, worauf die neue Papierrolle neben einer fast gänzlich abgespulten, zu ersetzenden alten Papierrolle plaziert wird und auf gleiche Geschwindigkeit wie diese beschleunigt wird, dann gegen diese gedrückt wird, so daß die offenliegende Selbstklebemasse des Klebebandes mit der Papierbahn der alten Rolle bei im wesentlichen gleichen Geschwindigkeiten der Papierbahnen verklebt, während zugleich die spleißfreudigen Papierträger derart spleißen, daß ihre Selbstklebemassen, die auf ihrem beschichtet waren, von ihren Resten nichtklebend abgedeckt sind, wie dies in Figur 3 dargestellt ist.

Bevorzugt ist dabei dieses Verfahren derart, daß von der geschlitzten Abdeckung zunächst nur der kleinere Teil abgezogen wird und das Klebeband hinter die oberste Papierbahn einer neuen Papierrolle mit dem freiliegenden Teil der Selbstklebemasse geklebt wird, währen der größere Teil der Abdeckung erst kurz vor dem Einsatz zum fliegenden Rollenwechsel abgezogen wird.

In der Praxis ermöglicht dies, daß nur eine Person den Splice einer 8 m breiten Papierrolle vorbereitet und vornimmt. Die Fahne" der neuen Rolle kann z.B. zurückgeschlagen werden, d.h. die oberste Papierbahn wird nach oben umgelegt. Dann wird auf die darunter liegende Bahn quer oder insbesondere diagonal ein erfindungsgemäßes Klebeband aufgeklebt mit seinen beiden Streifen eines doppelseitigen Klebebandes, während die obere Selbstklebemasse vorteilhaft mit einem Abdeckpapier abgedeckt ist. Dann wird insbesondere der obere Bereich des Abdeckpapiers abgezogen und die Fahne" über das Klebeband zurückgelegt und festgeklebt. Nun kann der überstehende Teil der Fahne" umgeknickt und abgetrennt werden, so daß ein Teil des Klebebandes frei liegt. Ggf. wird der Rest des Abdeckpapiers abgezogen und die Rolle ist fertig für den Splice.

Erfindungsgemäß wird der Papierindustrie ermöglicht, von dem bisherigen Verfahren der "Spitzenverklebung" abzugehen, ohne aber deren Vorteile aufzugeben. Zudem kann eine dem Verbraucher angebotene Rolle des Klebebandes wesentlich gleichmäßiger ausgeführt werden, insbesondere ohne Neigung zum Teleskopieren. Und es sind auch größere Rollen problemlos machbar und zu handhaben.

Aus technischen Gründen und auch aus Rationalisierungsgründen ist es erwünscht, beim automatischen Rollenwechsel an Beschichtungsanlagen von der bekannten "Spitzenverklebung" mit beidseitig wiederaufbereitbarem Klebeband (Fix) abzugehen. Nun kann auf ein einseitig klebendes wiederaufbereitbares Klebeband umgestellt werden, mit beachtlichen Vorteilen.

Bei dieser Verklebungstechnik mit einem erfindungsgemäßen Klebeband geht man vorteilhaft so vor, daß die oberste Papierlage (Rohpapier) mit einem etwa 75 mm breiten einseitig klebenden abgedeckten wiederaufbereitbarem Klebeband unterklebt wird (diagonal zur Laufrichtung). Die Unterklebung sollte ca. 15 mm betragen. Vor dem Unterkleben wird das 15 mm perforierte oder geschlitzte Abdeckpapier abgezogen. Für den eigentlichen Splice-Vorgang bleiben nach Abzug des Trennpapieres dann noch etwa 60 mm.

Das einseitig klebende Klebeband mit der offenen KJebebandseite nach außen steht jetzt dem eigentlichen Splice zur Verfügung, wenn die ggf. vorhandene Abdeckung entfernt ist.

Beim Beschleunigen des Papierwurfes ist erforderlich, daß der Anfang des Papiers (Klebestelle) mit Hilfe eines beidseitig klebenden Klebebandes (wiederaufbereitbar) festgehatten wird. Besonders geeignet ist hierbei ein tesafix, ausgerüstet mit einem spaltfreudigen Papierträger.

Geeignete spleißfreudige/spaltende Papierträger sind solche, die bei erfindungsgemäßem Einsatz in einem Klebeband beim damit vorgenommenen Splice spleißen/spalten: das Papier reißt in Richtung der Papierebene auf. Ein einfacher Handversuch kann dazu dienen, geeignete Papierträger zu ermitteln: das Papier wird beidseitig mit einer stark klebenden Selbstklebemasse beschichtet, wie dies Stand der Technik ist. Ein Streifen eines solchen Fixes (doppelseitig klebenden Bandes) wird dann zwischen zwei Blätter Schreibpapier geklebt und die Blätter ruckartig auseinander gerissen, senkrecht zur Ebene der Blätter. Im Fall eines spleißfreudigen Papierträgers spaltet dieser dabei in der Papierebene, wobei die auf den Blättern verklebten Bruchstücke an ihren nun offen liegenden Rückseite jeweils mit den Resten bzw. Teilschichten des gespaltenen Papierträgers bedeckt sind. Ein solcher Papierträger ist für die Erfindung geeignet. Im Fall eines nicht spleißfreudigen Papierträgers zerreißen die verklebten Blätter, die Verklebung bleibt intakt. Ein solcher Papierträger ist nicht für die vorliegende Erfindung geeignet. Sofern also vom Papierhersteller keine ausreichenden Angaben zur Spleißfreudigkeit bzw. Spaltbarkeit eines Papiers zu erhalten sind, kann dieser Test schnell und einfach Auskunft geben.

Das einseitig klebende Spliceband wird mit Hilfe dieser beidseitig klebenden spaltfreudigen tesafixe an die nächste Papierlage befestigt.

Um beim Beschleunigen des Papierwurfes (zur Zeit bis ca.1600 m/min) ein Eindringen von Luft zu verhindern, wird vorteilhaft ein Streifen quer über die gesamte Papierbahn zu geklebt.

Die erfindungsgemäß erzielten Vorteile liegen insbesondere darin, daß die Klebestelle wesentlich dünner als bisher ist (dadurch weniger Papierabrisse), daß weniger Stillstandzeiten der Maschinen auftreten (Erhöhung des Wirkungsgrades), denn ein Abriß kostet bis zu 30.000,- DM. Auch die Dicke der Klebestelle ist vorteilhaft gering: zur Zeit: 2 Papierlagen und ***tesa***fix Klebeband (Dicke des Klebebandes z.B. 0,085 mm), erfindungsgemäß aber nur 1 Papierlage und ***tesa***krepp (Dicke des Klebebandes z.B. 0,088 mm). Damit ergibt sich eine Zeiteinsparung und Personaleinsparung. Und insbesondere ist das Anbringen des erfindungsgemäßen Klebebandes an die Papierrolle leicht und sicher zu bewerkstelligen, auch bei senkrechter Lage der Klebstelle ist das Klebeband gut fixiert und beim schlußendlichen Splice ist die schnell nacheinander stattfindende Spaltung der beiden unterklebten Fixe vorteilthaft.

Im folgenden soll die Erfindung anhand eines Ausführungsbeispiels näher beschrieben werden, ohne sie damit aber unnötig einschränken zu wollen. Es zeigen:
- Fig. 1: eine seitliche, schematische Ansicht eines erfindungsgemäßen Klebebandes,
- Fig. 2: eine seitliche, schematische Ansicht eines Klebebandes gemäß Fig. 1, aufgeklebt auf eine Papierrolle und fertig für einen fliegenden Rollenwechsel, und
- Fig. 3: eine Ansicht gemäß Fig. 2, aber nach erfolgtem fliegenden Rollenwechsel.

Im einzelnen zeigt Fig. 1 ein Klebeband 1 mit einem Träger 2 aus gekrepptem Papier, einseitig beschichtet mit einer wasserlöslichen Selbstklebemasse 3. Die Gesamtdicke des Trägers 2 mit Selbstklebemasse 3 beträgt 0,08 mm, die Breite 75 mm, im Handel als ***tesa***krepp 51447 (Beiersdorf, Deutschland). Abgedeckt ist die Selbstklebemasse 3 mit einem silikonisierten Trennpapier 4, das in 15 mm Abstand vom linken Rand mit einem Schlitz 5 versehen ist, so daß zunächst der linke Teil des Trennpapiers 4 abgenommen werden kann, dann der rechte Teil. Am rechten Ende des Klebebandes 1 ist ein doppelseitig klebendes Klebeband 6 unterklebt, bestehend aus einem spleißfreudigen Papierträger 7, beidseits beschichtet mit wasserlöslicher Selbstklebemasse 8 bzw. 9. Das Klebeband 6 hat eine Breite von 9 mm. Am linken Ende des Klebebandes 1 ist ein weiteres doppelseitig klebendes Klebeband 14 unterklebt, aus dem selben Material wie Klebeband 6, mit spleißfreudigem Papierträger 15, beidseits beschichtet mit wasserlöslicher Selbstklebemasse 15 bzw. 17, Breite 3 mm oder 6 mm.

Auch die Selbstklebemassen 9 und 17 können mit Trennpapier abgedeckt sein (nicht dargestellt).

In Fig. 2 ist dargestellt, wie ein solches Klebeband 1 hinter eine Papierbahn 11 geklebt ist, und zwar mit dem linken Teil, nachdem von diesem der Teil des Trennpapiers 4a abgezogen wurde. Die freiliegenden Selbstklebemassen 9 und 17 sind auf die unter der Papierbahn 11 liegende Papierbahn 12 einer Papierrolle geklebt. Auch der rechte Teil 4 b des Trennpapiers 4 wurde abgezogen, so daß die so ausgerüstete Papierrolle fertig für einen fliegenden Rollenwechsel ist, wobei die Verklebung des Klebebandes 1 schräg über die Rolle verläuft, um einen Ruck im Moment des fliegenden Rollenwechsels zu vermeiden.

Die Selbstklebemasse 3 liegt nun offen und bereit für diesen fliegenden Wechsel, in einer Breite von 60 mm und über die gesamte Breite der Papierrolle.

Die so ausgerüstete (neue) Papierrolle wird neben die abgewickelte (alte) Papierrolle gebracht, an die die neue angesetzt werden soll, und auf die gleiche Drehgeschwindigkeit beschleunigt wie diese. Ist dies erreicht, kann der Wechsel vollzogen werden: die neue Rolle wird an die alte herangeführt, die Selbstklebemasse 3 verklebt gemäß Fig. 3 mit der Papierbahn 13 der alten Rolle, während die spleißfreudigen Papierträger 7 und 15 derart spleißen, daß Teile 7a bzw. 15 a auf dem Klebeband 1 verbleiben und dort die Selbstklebemasse 8 bzw. 16 abdecken, während die anderen Teile 7b bzw. 15 b auf der Selbstklebemasse 9 bzw. 17 verbleiben, welche auf der Papierbahn 12 kleben. Damit sind beide Selbstklebemassen 8 und 9 bzw. 16 und 17 gewissermaßen neutralisiert, kleben nicht mehr, und stören damit auch nicht im weiteren Prozeß in den Papiermaschinen.

Die Herstellung eines erfindungsgemäßen Klebebandes findet insbesondere so statt, daß auf die nicht klebende Rückseite eines Klebebandes 1 ein Streifen eines Fixes mit spleißfreudigem Träger aufkaschiert wird. Darauf wird das Laminat so geschnitten, daß das aufkaschierte Fix mit dem darunter liegenden Klebeband 1 in zwei Teile durchtrennt wird, die sich dann als Klebeband 6 bzw. Klebeband 14 an der Rückseite des Klebebandes 1 befinden. Der Schnitt wird dabei bevorzugt so gelegt, daß das Klebeband 6 breiter ist als das Klebeband 14, insbesondere 2 - 4 mal breiter, bevorzugt 3 mal so breit. Es können aber auch vorteilhaft symmetrische Produkte geschnitten werden, bei denen die Klebebänder 6 und 14 gleich breit sind.

## Patentansprüche

1. Klebeband für den fliegenden Rollenwechsel in Papierveredelungsmaschinen oder dergleichen, mit einem Papierträger und einer wasserlöslichen Selbstklebemasse, wobei der Papierträger (2) einseitig mit einer wasserlöslichen Selbstklebemasse (3) beschichtet ist, und ein Randbereich der Rückseite des Papierträgers (2) mit einem doppelseitig klebenden Klebeband (6) ausgerüstet ist, welches seinerseits einen spleißfreudigen Papierträger (7) aufweist, der beidseits mit wasserlöslicher Selbstklebemasse (8 und 9) ausgerüstet ist,
**dadurch gekennzeichnet, dass**
auch der andere Randbereich der Rückseite des Papierträgers (2) mit einem schmalen Streifen eines doppelseitig klebenden Klebebandes (14) ausgerüstet ist, welches seinerseits einen spleißfreudigen Papierträger (15) aufweist, der beidseits mit wasserlöslicher Selbstklebemasse (16 und 17) ausgerüstet ist.

2. Klebeband nach Anspruch 1, **dadurch gekennzeichnet, daß** die Selbstklebemasse (3) eine Abdeckung (4) aufweist.

3. Klebeband nach Anspruch 2, **dadurch gekennzeichnet, daß** die auf der Vorderseite vorgesehene Abdeckung (3) mit einem Schlitz (5) versehen ist.

4. Klebeband nach Anspruch 1, **dadurch gekennzeichnet, daß** das Klebeband (1) 60 bis 80 mm breit ist, während das auf der Rückseite vorgesehene Klebeband (6) 3 - 15 mm, insbesondere 3 -10 mm breit ist und das auf der Rückseite vorgesehene Klebeband (14) 3 - 15 mm, insbesondere 9 - 10 mm breit ist.

5. Klebeband nach Anspruch 3, **dadurch gekennzeichnet, daß** der Schlitz (5) im Abstand von 15 - 40 mm von dem Rand des Klebebandes (1) vorgesehen ist, welcher dem rückseitig vorgesehenen Klebeband (6) entgegengesetzt liegt.

6. Klebeband nach Anspruch 1, **dadurch gekennzeichnet, daß** die Klebebänder (6 und 14) auf der Rückseite des Papierträgers (2) so angeordnet sind, daß diese seitlich mit den Seiten des Papierträgers (2) abschließen.

7. Klebeband nach Anspruch 1, **dadurch gekennzeichnet, daß** die auf der Rückseite des Papierträgers (2) angeordneten Klebebänder (6 und 14) aus dem selben Material bestehen.

8. Verfahren eines fliegenden Rollenwechsels in einer Papierveredelungsmaschine oder dergleichen, wobei ein Klebeband mit einem Papierträger und einer wasserlöslichen Selbstklebemasse verwendet wird, wobei ein Randbereich der Rückseite des Papierträgers (2) mit einem ersten doppelseitig klebenden Klebeband (6) ausgerüstet ist, welches seinerseits einen spleißfreudigen Papierträger (7) aufweist, der beidseits mit wasserlöslicher Selbstklebemasse (8 bzw. 9) ausgerüstet ist, wobei mit dem Klebeband die oberste Papierbahn einer neuen Papierrolle teilweise hinterklebt wird, während das auf der Rückseite des Klebebandes befindliche erste doppelseitige Klebeband seinerseits mit der darunter liegenden Papierbahn verklebt und dabei die oberste Papierbahn sichert, worauf die neue Papierrolle neben einer fast gänzlich abgespulten, zu ersetzenden alten Papierrolle platziert und auf die gleiche Geschwindigkeit wie diese beschleunigt wird, dann gegen diese gedrückt wird, so dass die offenliegende Selbstklebemasse des Klebebandes mit der Papierbahn der alten Rolle bei im wesentlichen gleichen Geschwindigkleiten verklebt, während zugleich der spleißfreudige Papierträger des ersten doppelseitig klebenden Klebebandes derart spleißt, dass beide Klebemassen, die auf ihm beschichtet waren, von seinen Resten nichtklebend abgedeckt sind, **dadurch gekennzeichnet, dass** man ein Klebeband nach einem der Ansprüche 1 - 7 einsetzt, bei welchem auch der andere Randbereich der Rückseite des Papierträgers (2) mit einem schmalen Streifen eines zweiten doppelseitig klebenden Klebebandes (14) ausgerüstet ist, welches seinerseits einen spleißfreudigen Papierträger (15) aufweist, der beidseits mit wasserlöslicher Selbstklebemasse (16 bzw. 17) ausgerüstet ist,
wobei das doppelseitig klebende Klebeband (14) ebenfalls mit der darunter liegenden Papierbahn verklebt und wobei während des Drückens gegen die alte Papierrolte auch der spleißfreudige Papierträger des zweiten doppelseitig klebenden Klebebandes (14) derart spleißt, dass die Selbstklebemasse, die auf ihm beschichtet war, von den Resten seines Papierträgers nichtklebend abgedeckt ist.

9. Verfahren nach Anspruch 8 unter Verwendung eines Klebebandes nach einem der Ansprüche 3 oder 5, **dadurch gekennzeichnet, daß** von der geschlitzten Abdeckung zunächst nur der kleinere Teil abgezogen wird und das Klebeband hinter die oberste Papierbahn einer neuen Papierrolle mit dem freiliegenden Teil der Selbstklebemasse geklebt wird, währen der größere Teil der Abdeckung erst kurz vor dem Einsatz zum fliegenden Rollenwechsel abgezogen wird.

## Claims

1. Adhesive tape for the flying splice in paper finishing machines or the like having a paper backing and a water-soluble self-adhesive composition, the paper backing (2) being coated on one side with a water-soluble self-adhesive composition (3), and an edge region of the reverse face of the paper backing (2) being equipped with a double-sided adhesive tape (6) which in turn has a readily splicing paper backing (7) which is equipped on both sides with water-soluble self-adhesive composition (8 and 9), **characterized in that**, in addition, the other edge region of the reverse face of the paper backing (2) is equipped with a narrow strip of a double-sided adhesive tape (14) which in turn has a readily splicing paper backing (15) which is equipped on both sides with water-soluble self-adhesive composition (16 and 17).

2. Adhesive tape according to Claim 1, **characterized in that** the self-adhesive composition (3) has a liner (4).

3. Adhesive tape according to Claim 2, **characterized in that** the liner provided on the front face (3) is provided with a slit (5).

4. Adhesive tape according to claim 1, **characterized in that** the adhesive tape (1) is from 60 to 80 mm in width while the adhesive tape (6) provided on the reverse face is 3-15 mm, in particular 3-10 mm, in width and the adhesive tape (14) provided on the reverse face is 3-15 mm, in particular 9-10 mm, in width.

5. Adhesive tape according to Claim 3, **characterized in that** the slit (5) is provided at a distance of 15-40 mm from the edge of the adhesive tape (1) which lies opposite the adhesive tape (6) provided on the reverse face.

6. Adhesive tape according to Claim 1, **characterized in that** the adhesive tapes (6 and 14) on the reverse face of the paper backing (2) are arranged such that they end laterally with the sides of the paper backing (2).

7. Adhesive tape according to Claim 1, **characterized in that** the adhesive tapes (6 and 14) arranged on the reverse face of the paper backing (2) consist of the same material.

8. Method of flying splice in a paper finishing machine or the like, using an adhesive tape having a paper backing and a water-soluble self-adhesive composition, an edge region of the reverse face of the paper backing (2) being equipped with a first double-sided adhesive tape (6) which in turn has a readily splicing paper backing (7) which is equipped on both sides with water-soluble self-adhesive composition (8 or 9) and the adhesive tape being bonded to the back of part of the topmost web of a new roll of paper, while the first double-sided adhesive tape located on the reverse face of the adhesive tape in turn bonds with the underlying web of paper and in doing so secures the topmost web of paper, whereupon the new roll of paper is placed adjacent to an almost fully unwound old roll of paper that is to be replaced and is accelerated to the same speed as the old roll, and then is pressed against it so that the exposed self-adhesive composition of the adhesive tape bonds with the paper web of the old roll when the speeds are essentially the same, while at the same time the readily splicing paper backing of the first double-sided adhesive tape splices in such a way that both self-adhesive compositions with which it was coated are masked non-adhesively by the remains of the said backing, **characterized in that** an adhesive tape according to one of Claims 1 - 7 is employed, in which, in addition, the other edge region of the reverse face of the paper backing (2) is equipped with a narrow strip of a second double-sided adhesive tape (14) which in turn has a readily splicing paper backing (15) which is equipped on both sides with water-soluble self-adhesive composition (16 or 17), the double-sided adhesive tape (14) likewise bonding with the underlying web of paper and during the pressing against the old roll of paper the readily splicing paper backing of the second double-sided adhesive tape (14) splicing in such a way that the self-adhesive composition with which it is coated is masked non-adhesively by the remains of said paper backing.

9. Method according to Claim 8, **characterized in that** first of all only the smaller portion of the slitted liner is peeled away and the adhesive tape is bonded with the exposed portion of the self-adhesive composition behind the topmost web of a new roll of paper, while the larger portion of the liner is not peeled away until shortly before its use for the flying splice.

## Revendications

1. Ruban adhésif pour le remplacement d'une bobine à la volée dans des machines de transformation de papier ou similaires, avec un support en papier et une pâte adhésive soluble dans l'eau, le support en papier (2) étant revêtu sur une face par une pâte adhésive (3) soluble dans l'eau, une bordure du côté arrière du support en papier (2) étant équipée d'un ruban adhésif double face (6) qui, pour sa part, présente un support en papier de raccord (7) qui est doté sur ses deux faces d'une pâte adhésive soluble dans l'eau (8 et 9), **caractérisé en ce que** l'autre bordure du côté arrière du support en papier (2) est également dotée d'une petite bande d'un ruban adhésif double face (14) qui, pour sa part, présente un support en papier de raccord (15) qui est doté sur ses deux faces d'une pâte adhésive (16 et 17) soluble dans l'eau.

2. Ruban adhésif selon la revendication 1, **caractérisé en ce que** la pâte adhésive (3) présente un recouvrement (4).

3. Ruban adhésif selon la revendication 2, **caractérisé en ce que** le recouvrement (3) prévu sur le côté avant est doté d'une fente (5).

4. Ruban adhésif. selon la . revendication 1, **caractérisé en ce que** le ruban adhésif (1) présente une largeur de 60 à 80 mm, tandis que le ruban adhésif (6) prévu sur le côté arrière présente une largeur de 3 à 15 mm et en particulier de 3 à 10 mm et que le ruban adhésif (14) prévu sur le côté arrière présente une largeur de 3 à 15 mm et en particulier de 9 à 10 mm.

5. Ruban adhésif selon la revendication 3, **caractérisé en ce que** la fente (5) est prévue à une distance de 15 à 40 mm du bord du ruban adhésif (1) qui est opposé au ruban adhésif (6) prévu sur le côté arrière.

6. Ruban adhésif selon la revendication 1, **caractérisé en ce que** les rubans adhésifs (6 et 14) sont disposés sur le côté arrière du support en papier (2) de telle sorte qu'ils se raccordent latéralement aux côtés du support en papier (2).

7. Ruban adhésif selon la revendication 1, **caractérisé en ce que** les rubans adhésifs (6 et 14) disposés sur le côté arrière du support en papier (2) sont constitués des mêmes matériaux.

8. Procédé, de remplacement d'une bobine à la volée, dans une machine de transformation de papier ou similaires, dans lequel on utilise un ruban adhésif doté d'un support en papier et d'une pâte adhésive soluble dans l'eau, une bordure du côté arrière du support en papier (2) étant, dotée d'un premier ruban adhésif double face (6) qui, pour sa part, présente un support en papier de raccord (7) qui est doté sur ses deux faces d'une pâte adhésive (8 et 9) soluble dans l'eau, le ruban adhésif collant une partie de l'arrière de la bande de papier supérieure d'une nouvelle bobine de papier tandis que Le premier ruban adhésif double face situé sur .le côté arrière du ruban adhésif est pour sa part collé à la bande de papier située en dessous et protège ainsi la bande de papier supérieure, suite à quoi la nouvelle bobine de papier est placée à côté d'une vieille bobine de papier presque complètement déroulée et qui doit être remplacée et est accélérée à la même vitesse que cette dernière pour être ensuite repoussée contre elle de telle sorte que la pâte adhésive exposée du ruban adhésif est collée à la bande de papier de l'ancienne bobine à des vitesses essentiellement égales, tandis qu'en même temps, le support en papier de raccord du premier ruban adhésif double face assure le raccord de telle sorte que les deux pâtes adhésives qui ont été appliquées sur lui ne soient pas recouvertes par ses résidus pour ainsi perdre leur adhérence, **caractérisé en ce que** l'on utilise un ruban adhésif selon l'une quelconque des revendications 1 à 7, dans lequel l'autre bordure du côté arrière du support en papier (2) est munie d'une petite bande d'un deuxième ruban adhésif double face (14) qui, pour sa part, présente un support en papier de raccord (15) qui aété muni sur ses deux faces d'une pâte adhésive (16 et 17) soluble dans l'eau, le ruban adhésif double face (14) étant également collé sur la bande de papier située en dessous, et lors de la poussée contre la vieille bobine de papier, lé support en papier de raccord du deuxième ruban adhésif double face (14) assure le raccord de telle sorte que la pâte adhésive qui a été appliquée sur lui n'est pas recouverte par les résidus de son support en papier pour ainsi perdre son adhérence.

9. Procédé selon la revendication 8, qui recourt à un ruban adhésif selon la revendication 3 ou 5, **caractérisé en ce que** l'on enlève d'abord que la petite partie du recouvrement fendu et **en ce que** le ruban adhésif est collé en dessous de la bande de papier supérieure d'une nouvelle bobine de papier par la partie libérée de la pâte adhésive, tandis que la plus grande partie du recouvrement n'est enlevée que peu avant son utilisation pour le remplacement d'une bobine à la volée.
